# EUROPEAN PATENT SPECIFICATION

(11) **EP 1 979 978 B1**
(45) Date of publication and mention of the grant of the patent: **06.04.2016**
(21) Application number: 07708467.1
(22) Date of filing: 09.01.2007
(51) Int. Cl.: H01M 10/42, H01M 10/052, H01M 10/0567, H01M 10/0569

(54) **NONAQUEOUS ELECTROLYTE INCLUDING DIPHENYL ETHER AND LITHIUM SECONDARY BATTERY USING THEREOF**
DIPHENYLETHER ENTHALTENDER WASSERFREIER ELEKTROLYT UND LITHIUM-SEKUNDÄRBATTERIE MIT DIESEM
ÉLECTROLYTE NON AQUEUX COMPRENANT DE L'ÉTHER DE DIPHÉNYLE ET PILE SECONDAIRE AU LITHIUM DANS LEQUEL LEDIT ÉLECTROLYTE EST UTILISÉ

(30) Priority: 09.01.2006 KR 20060002255
(43) Date of publication of application: 15.10.2008
(73) Proprietor: Panax Etec Co., Ltd., Geumjeong-gu, Busan (KR)
(72) Inventor: OH, Jung Kang, Incheon 404-240 (KR); CHO, Young Jai, Gwangju 502-156 (KR); LEE, Jeong Min, Seoul 140-190 (KR); KIM, Hak Soo, Gumi, Gyeongsangbuk-do, 730-787 (KR); YANG, Ho Seok, Daejeon 302-781 (KR)
(74) Representative: Lang, Johannes
(86) International application number: PCT/KR2007/000170
(87) International publication number: WO 2007/081151

(56) References cited:
- WO-A1-2005/074067
- WO-A1-2005/117197
- JP-A- 2003 297 425
- JP-A- 2004 006 164
- JP-A- 2004 134 261
- KR-A- 20040 061 563
- KR-A- 20040 061 563
- US-A1- 2001 018 146
- US-A1- 2001 018 146

## Description

### [Technical Field]

The present invention relates to a non-aqueous electrolyte comprising a halogenated diphenyl ether compound, and a lithium secondary battery comprising the non-aqueous electrolyte. More specifically, the present invention relates to a non-aqueous electrolyte which enables an improvement in life cycle property and high-temperature property as well as stability upon overcharging of a lithium secondary battery, and a lithium secondary battery comprising the non-aqueous electrolyte.

### [Background Art]

Lithium secondary batteries include a positive electrode coated with a positive active material such as lithium metal oxide, and a negative electrode coated with a negative active material such as a carbon material or metallic lithium. The lithium secondary batteries further include an electrolyte, in which a lithium salt is dissolved in an organic solvent, arranged between the positive electrode and the negative electrode.

During charging of lithium secondary batteries, lithium ions (Li⁺) present in the electrolyte move from the positive electrode to the negative electrode. On the other hand, during discharging thereof, the lithium ions (Li⁺) move from the negative electrode to the positive electrode to generate electricity. At this time, electrons flow in the opposite direction of the lithium ions via a wire connecting the positive electrode to the negative electrode.

Lithium secondary batteries have an average discharge voltage of about 3.6 to 3.7 V, thus exhibiting a power higher than other secondary batteries such as alkali, nickel metal hydride (Ni-MH) or nickel-cadmium (Ni-Cd) batteries. To ensure the high discharge voltage, the electrolyte applied to the lithium secondary batteries is required to be electrochemically stable at a charge/discharge voltage ranging from 0 to 4.2 V.
The electrolyte employed in lithium secondary batteries serves as a medium enabling lithium ions to flow between the positive electrode and the negative electrode. Thus, the electrolyte is required to be stable at an operation voltage of the battery and transfer the ions at a high rate. A non-aqueous carbonate-based solvent such as ethylene carbonate, dimethyl carbonate and diethyl carbonate is generally used as a solvent in an electrolyte of a lithium secondary battery.
However, in the case where the lithium secondary battery is overcharged at a voltage of 4.2 V or more (*i.e.,* 6 V), the organic solvent in contact with a positive electrode initiates oxidative decomposition to generate undesired heat. The heat generation leads to rupture or ignition of the battery, thus making it impossible to ensure stability of the lithium secondary battery. Accordingly, there has been actively attempted to ensure stability of a lithium secondary battery upon overcharging.

Japanese Patent Publication No. 2000-156243 and Japanese Patent Publication No. hei 9-106835 disclose an electrolyte comprising an organic compound as an additive, such as a biphenyl derivative. According to these prior arts, an organic compound (*i.e.*, a biphenyl derivative) forms a redox shuttle in a battery or undergoes polymerization at a voltage exceeding a maximum operation voltage, thereby ensuring stability of the battery upon overcharging.

Japanese Patent Publication No. hei 10-275632 discloses a use of an alkyl-containing nonionic aromatic compound included as an additive in an electrolyte for a lithium secondary battery in which a linear ester-based organic solvent is contained. Further, as the example of the nonionic aromatic compound, it discloses cyclohexylbenzene, etc.

However, the biphenyl and cylcohexylbenzene used as an additive in the mentioned prior arts have limitations in ensuring stability of the lithium secondary battery upon overcharging to the desired level, and affect adversely life cycle property and high-temperature property of the lithium secondary battery.

More specifically, the biphenyl and cylcohexylbenzene undergo oxidative decomposition even at a relatively low temperature slightly higher than 40°C and a relatively low voltage slightly higher than 4.4 V. The resulting product is deposited on the surface of a positive electrode. Although the battery is operated at a normal driving voltage, in the case where the battery is stored at a high temperature or partly exposed to a high voltage, the biphenyl and cylcohexylbenzene undergo oxidative decomposition, and continuously leaves a deposit on the surface of the positive electrode. Accordingly, repetitive use of the battery for a long period via a series of charging and discharging thereof causes a gradual decrease in content of the biphenyl and cylcohexylbenzene in the electrolyte thereof, thus making it difficult to ensure sufficient stability upon overcharging. Meanwhile, even if there is no overcharging, in the case where the secondary battery is stored at a high temperature or partly exposed to a high voltage, the deposition of the biphenyl and cylcohexylbenzene on the positive electrode surface is continued, thereby resulting in a great decrease in capacity of the secondary battery, and causing a deterioration in life cycle and high-temperature properties thereof.

Document WO 2005/074067 A1 discloses a nonaqueous electrolyte solution for a lithium secondary battery, the nonaqueous electrolyte solution being obtained by dissolving an electrolyte in a nonaqueous solvent containing plural kinds of cyclic carbonate compounds, the electrolyte solution further containing 1-10 mass% of a cyclohexylbenzene compound wherein a halogen atom is bonded to a benzene ring and 0.1-5 mass% of a fluorobenzene compound.

Document WO 2005/117197 A1 discloses a nonaqueous electrolyte solution for lithium secondary batteries which is obtained by dissolving an electrolyte salt in a nonaqueous solvent containing 0.01-10 mass% of a sulfur acid ester compound and 0.01-10 mass% of a triple-bond compound.

Document JP 2004 006164 A discloses a non-aqueous electrolytic solution containing2-15 mass% of an aromatic compound, the aromatic compound being a compound wherein an alkyl group is bonded to the aromatic ring or being a compound wherein a halogen group is bonded to the aromatic ring or a mixture of both.

### [Technical Solution]

In accordance with one aspect of the present invention, there is provided a non-aqueous electrolyte for a lithium secondary battery comprising:
a lithium salt;
a basic organic solvent including a carbonate-based solvent; and
a halogenated diphenyl ether compound represented by the following Formula 1 enabling stabilization of the lithium secondary battery at an overcharge voltage of 4.2 V or more, 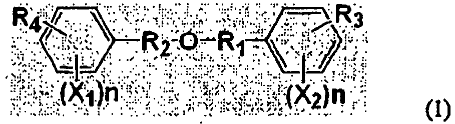 wherein R₁ is a single bond, and R₂ is a C₁-C₅ alkyl group; R₃ and R₄ are hydrogen; X₁ halo and X₂ is hydrogen; and n is an integer of 1 to 4.

In accordance with another aspect of the present invention, there is provided a lithium secondary battery including:
the non-aqueous electrolyte according to one aspect of the present invention;
an electrode part comprising a positive electrode and a negative electrode faced opposite to each other with the non-aqueous electrolyte; and
a separator electrically separating the positive electrode from the negative electrode.

Details of other aspects and exemplary embodiments of the present invention are encompassed in the following detailed description and the accompanying drawings.

### [Description of Drawings]

FIG. 1 is a schematic diagram illustrating the lithium secondary battery wherein LiCoO₂ is used as a positive active material, carbon is used as a negative active material, arid non-aqueous electrolyte is used as an electrolyte, according to an embodiment of the present invention;
FIG. 2 is a graph illustrating a linear sweep voltametry (LSV) measurement result of an electrolyte containing 4-bromodiphenyl ether;
FIG. 3 is a graph illustrating of an LSV measurement result of an electrolyte containing 4-chlorodiphenyl ether;
FIG. 4 is a graph illustrating comparison of an LSV measurement result of an electrolyte containing each of 4-chlorodiphenyl ether, 4-fluorodiphenyl ether and 4-bromodiphenyl ether;
FIG. 5 is a graph illustrating an LSV measurement result of an electrolyte containing diphenyl ether;
FIG. 6 is a graph illustrating an LSV measurement result of an electrolyte containing biphenyl;
FIG. 7 is a graph illustrating an LSV measurement result of an electrolyte containing cyclohexylbenzene;
FIG. 8 is a graph illustrating an LSV measurement result of an electrolyte containing biphenyl and cyclohexylbenzene;
FIG. 9 is a graph illustrating an LSV measurement result of an electrolyte containing no halogenated diphenyl ether compound; and
FIGs. 10 to 15 are graphs illustrating a measurement result of a voltage and current of each lithium secondary battery in Reference Examples 1 and 5, and Comparative Examples 4 to 7 overcharged with an electric current of 780 mA for 2.5 hours in a 4.2 V full-charged state, respectively.

### [Best Mode]

Now, the present invention will be described in more detail with reference to the following Examples, such that those skilled in the art easily practice the present invention. These examples are provided only for illustrating the present invention and should not be construed as limiting the scope and sprit of the present invention.
According to one embodiment of the present invention, there is provided a non-aqueous electrolyte for a lithium secondary battery comprising a lithium salt, a basic organic solvent including a carbonate-based solvent, and a halogenated diphenyl ether compound represented by the following Formula 1 enabling stabilization of the lithium secondary battery at an overcharge voltage of 4.2 V or more, 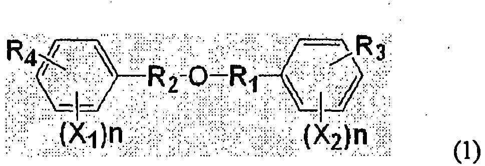 wherein R₁ is a single bond, and R₂ is a C₁-C₅ alkyl group; R₃ and R₄ are hydrogen; X₁ halo and X₂ is hydrogen; and n is an integer of 1 to 4.

The non-aqueous electrolyte enables an improvement in life cycle and high-temperature properties as well as stability of a lithium secondary battery upon overcharging, based on the following mechanism:
The non-aqueous electrolyte comprises a halogenated diphenyl ether compound, in which hydrogen of only one phenyl group is substituted by halogen, as an additive. As will be illustrated in the following Examples, the halogenated diphenyl ether compound undergoes oxidative decomposition at a relatively high voltage of about 4.50 to 4.60 V lower than 6 V, at which a basic organic solvent initiates oxidative decomposition, and leaves a deposit on the surface of a positive electrode.

Accordingly, upon overcharging of a lithium secondary battery, the additive, prior to the basic organic solvent, undergoes oxidative decomposition and leaves a deposit of the resulting product on an positive electrode, thereby preventing the basic organic solvent from being oxidized and decomposed, and ensuring stability of the lithium secondary battery.

Upon high-rate overcharging to which a charge capacity C twice or more than that of the lithium secondary battery is applied, the basic organic solvent has been believed to undergo oxidative composition to generate undesired heat, even at a voltage lower than 6 V (*i.e.,* 4.70 V more and less). On the other hand, other diphenyl ether compounds, in which hydrogen of both phenyl groups is substituted by halogen, initiate oxidative composition and deposition at a voltage higher than 4.70 V. Accordingly, when such a diphenyl ether compound is used, the basic organic solvent, prior to this diphenyl ether compound, initiates oxidative decomposition to generate the undesired heat, upon the high-rate overcharging. Meanwhile, the halogenated diphenyl ether compound of the Formula 1 undergoes oxidative decomposition and leaves a deposit on a positive electrode at a voltage of about 4.50 to 4.60 V. That is, even upon high-rate overcharging, oxidative decomposition of the compound of the Formula 1 is occurred prior to that of the basic organic solvent. As a result, oxidative decomposition of the basic organic solvent can be inhibited. Hence, it is possible to ensure stability of the lithium secondary battery even upon high-rate overcharging.
That is to say, the use of the non-aqueous electrolyte, in which the halogenated diphenyl ether compound of the Formula 1 is contained as an additive, enables the lithium secondary battery to exhibit sufficient stability upon high-rate overcharging as well as overcharging.

Meanwhile, the halogenated diphenyl ether compound of the Formula 1 undergoes oxidative decomposition at a relatively high voltage of about 4.50 to 4.60 V and at a relatively high temperature corresponding to the voltage. For this reason, even if the lithium secondary battery is stored under the conditions of a high temperature or is partly exposed to high voltage (*i.e.,* about 4.4 V) during a normal operation at a driving voltage of 4.2 V or less, oxidative decomposition and deposition of the additive can be decreased. As a result, during use of the lithium secondary battery even for a long period, a reduction in content of the additive, and a decrease in the battery capacity due to the additive deposition can be lowered. This enables improvement in life cycle and high-temperature properties of the lithium secondary battery.

In addition, the halogenated diphenyl ether compound of Formula 1, where hydrogen of only one phenyl group is substituted by halogen, has a viscosity lower than other diphenyl ether compounds, in which hydrogen of both phenyl groups is substituted by halogen, and undergoes no rapid variation of the viscosity at a low temperature. For this reason, the use of the compound of Formula 1 as an additive enables the lithium secondary battery to maintain to continuously exhibit a high charge capacity even at a low temperature of -20°C or less. As a result, low-temperature property of the lithium secondary battery can be improved more effectively.

Hereinafter, each constituent component of the non-aqueous electrolyte will be illustrated in detail.

First, the non-aqueous electrolyte comprises a basic organic solvent including a carbonate-based solvent.

The basic organic solvent may be carbonate-based solvent, or a mixture thereof with one selected from the group consisting of an ester-based solvent, aromatic hydrocarbon-based solvent and ether-based solvent.

More specifically, examples of the carbonate-based solvent include, but are not limited to dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoro ethylene carbonate (FEC), vinylene carbonate (VC) and vinylethylene carbonate (VEC).

Examples of the ester-based solvent include, but are not limited to γ-butyrolactone (BL), decanolide, valerolactone, mevalonolactone, caprolactone, n-methyl acetate, n-ethyl acetate and n-propyl acetate. Examples of the ether-based solvent include, but are not limited to dimethyl ether, diethyl ether, dipropyl ether and dibutyl ether.

Examples of the aromatic hydrocarbon-based solvent include, but are not limited to fluorobenzene, 4-chlorotoluene (4-CT); and 4-fluorotoluene (4-FT).

The non-aqueous organic solvent may be used singly, or as a mixture of two or more solvents thereof.

Preferably, the basic organic solvent contained in the non-aqueous organic solvent comprises at least one linear carbonate selected from the group consisting of dimethyl carbonate (DMC), diethyl carbonate (DEC) and methylethyl carbonate (MEC), and at least one cyclic carbonate selected from the group consisting of ethylene carbonate (EC), propylene carbonate (PC) and butylene carbonate (BC).

The cyclic carbonate-based solvent sufficiently dissolves lithium ions owing to its high polarity, but exhibits a low ion-conductivity due to its high viscosity. Therefore, the use of a mixed solvent of cyclic carbonate and linear carbonate having a low polarity and a low viscosity, as a basic organic solvent of the non-aqueous electrolyte, enables optimization of the lithium secondary battery properties:

The non-aqueous electrolyte further comprises a lithium salt as a solute.

More specifically, the lithium salt is selected from the group consisting of LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂ LiN(CₓF₂ₓ₊₁SO₂)(C_{y}F_{2y+1}SO₂) (wherein, each of x and y is a positive integer), LiCl, LiI and mixture thereof.

Any lithium salt may be used without particular limitation so long as it is applicable to a lithium secondary battery.

The lithium salt is used in a concentration of 0.6 to 2.0 M, preferably, 0.7 to 1.6 M, with respect to the basic organic solvent. The use of the lithium salt in a concentration less than 0.6 M causes deterioration in electrical conductivity of the non-aqueous electrolyte, in which the lithium salt is contained, thus leading to deterioration in the performance capability of transmitting ions between a positive electrode and a negative electrode at a high rate. Meanwhile, the use of the lithium salt in a concentration exceeding 2.0 M causes an increase in viscosity of the non-aqueous electrolyte, thus disadvantageously leading to a reduction in the mobility of lithium ions and performance of the battery at low-temperature.

The non-aqueous electrolyte, in addition to the basic organic solvent and lithium salt, comprises an additive containing the halogenated diphenyl ether compound of Formula 1.

The halogenated diphenyl ether compound of Formula 1 has a structure in which hydrogen of one phenyl group is substituted with halogen. The halogen substituent is preferably selected from chlorine and fluorine. As will be illustrated in the following Examples, the halogenated diphenyl ether compound of Formula 1 containing one substituent selected from chlorine and fluorine exhibits a high reactivity at an oxidative decomposition voltage of 4.5 to 4.6 V, as compared to other halogenated diphenyl ether compounds containing one substituent (*i*.*e.,* bromine) selected form halogen except for chlorine and fluorine. That is to say, the halogenated diphenyl ether compound of Formula 1 containing a susbtituent of chlorine or fluorine as an additive rapidly undergoes oxidative decomposition at a voltage of about 4.50 V or more, prior to the basic organic solvent, and leaves plenty of deposits on the positive electrode, thereby preventing oxidative decomposition of the basic organic solvent and an occurrence of undesired heat. As a result, stability of the lithium secondary battery can be improved more efficiently upon overcharging.

In addition, the halogenated diphenyl ether compound of Formula 1 may be selected from chlorobenzyl phenyl ether, fluorobenzyl phenylether and mixture thereof. Any halogenated diphenyl ether may be used without particular limitation so long as it is within the scope of Formula 1.

The additive may further comprise at least one selected from the foregoing compounds such as biphenyl, cyclohexylbenzene, chlorotoluene and fluorotoluene, which have been used in a non-aqueous electrolyte as an additive.

The halogenated diphenyl ether compound is preferably used in an amount of 0.1 to 10 parts by weight, more preferably, 1 to 10 parts by weight, based on 100 parts by weight of the basic organic solvent. The use of the halogenated diphenyl ether compound in an amount less than 0.1 parts by weight makes it difficult to improve stability, life cycle property and high-temperature property of the lithium secondary battery to the desired level. Meanwhile, the use of the halogenated diphenyl ether compound in an amount exceeding 10 parts by weight causes a deterioration in life cycle property of the lithium secondary battery.

Hereinafter, effects of the non-aqueous electrolyte, in which the halogenated diphenyl ether compound of Formula 1 is contained as an additive, will be described in greater detailed.

The major problem in operation of a lithium secondary battery at a normal operation voltage (*i.e.,* 4.3 V or less) is oxidative decomposition due to a negative electrode being in contact with an electrolyte, gas generation due to the oxidative decomposition, and an increase in internal pressure of the battery. In an attempt to prevent the negative electrode from being reacted with the electrolyte, there has been suggested formation of a coating on the negative electrode. However, upon overcharging or under a high temperature, the electrolyte, in particular, the organic solvent contained in the electrolyte undergoes active oxidative decomposition on the surface of a positive electrode, thus causing an occurrence of undesired heat and an increase in internal pressure of the battery.

To solve these problems, the non-aqueous electrolyte comprises the halogenated diphenyl ether compound undergoing oxidative decomposition at a voltage of about 4.5 to 4.6 V that is less than a voltage of 6 V, at which the organic solvent initiates oxidative decomposition. Upon overcharging, the additive, prior to the organic solvent, undergoes oxidative decomposition to generate gas and leaves a deposit of the resulting product on the surface of the positive electrode.

The deposited resulting product enables formation of a coating (*i.e.*, a passivation layer) on the positive electrode surface, thereby preventing the non-aqueous electrolyte comprising the organic solvent from undergoing oxidative decomposition. In particular, the coating acts as not only a resistor, but an overcharge inhibitor, since it is hardly redissolvable in the electrolyte. Therefore, the inclusion of the halogenated diphenyl ether compound as an additive in the non-aqueous electrolyte cause a reduction in heat generation upon overcharging, thereby preventing thermal runaway and enhancing stability of the battery.
Upon high-rate overcharging to which a charge capacity C twice or more than that of the lithium secondary battery is applied, the basic organic solvent may undergo oxidative composition and generate undesired heat, even at a voltage lower than 6 V (*i.e.,* 4.70 V more and less). The halogenated diphenyl ether compound of Formula 1 undergoes oxidative composition and deposition at a voltage about 4.50 to 4.60 V lower than 4.70 V. Accordingly, even upon high-rate overcharging, the halogenated diphenyl ether compound, prior to the basic organic solvent, undergoes oxidative decomposition and leaves a deposit of the resulting product on the positive electrode. Hence, upon high-rate overcharging of the lithium secondary battery, the halogenated diphenyl ether compound contained in the electrolyte inhibits oxidative decomposition of the basic organic solvent and the occurrence of undesired heat, thereby ensuring more improved stability.
Accordingly, the use of the non-aqueous electrolyte comprising the halogenated diphenyl ether compound as an additive enables the lithium secondary battery to exhibit sufficient stability upon overcharging, particularly, even upon high-rate overcharging.
The halogenated diphenyl ether compound undergoes oxidative decomposition at a relatively high voltage of about 4.50 to 4.60 V and at a relatively high temperature corresponding to the voltage. For this reason, even if the lithium secondary battery is stored under the conditions of a high temperature or is partly exposed to high voltage (*i.e.,* about 4.4 V) during a operation at a normal voltage of 4.2 V or less, oxidative decomposition and deposition of the additive can be reduced. As a result, during use of the lithium secondary battery even for a long period, a reduction in content of the additive and a decrease in the battery capacity due to the additive deposition can be lowered. This enables an improvement in life cycle and high-temperature properties of the lithium secondary battery.

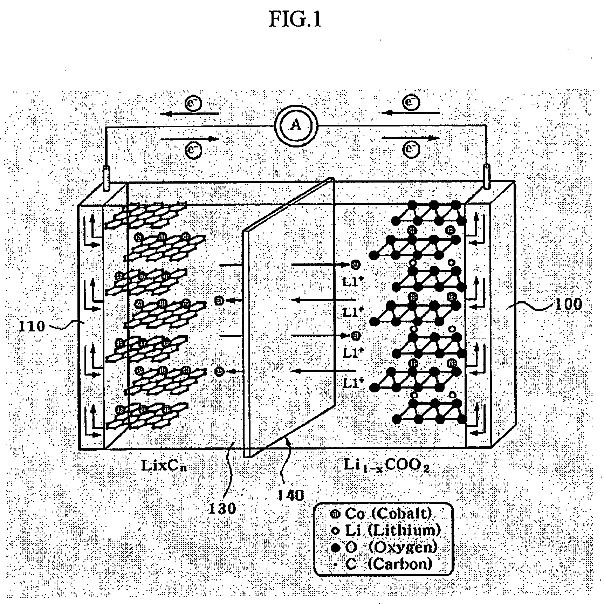

In addition, the halogenated diphenyl ether compound of Formula 1 has a relatively low viscosity, and undergoes no rapid variation in viscosity at a low temperature. For this reason, the use of the compound of Formula 1 as an additive enables a high charge capacity of the lithium secondary battery to maintain even at a low temperature of -20 °C or less. As a result, low-temperature property of the lithium secondary battery can be improved more effectively.
The non-aqueous electrolyte is stable at a temperature ranging from -20 to 60 °C, and maintains stability even at a voltage of 4 V, thereby improving stability and reliability of the lithium secondary battery. Thus, the non-aqueous electrolyte may be applied to any lithium secondary battery, such as lithium ion battery and lithium polymer battery, without particular limitation.
According to another embodiment of the present invention, there is provided a lithium secondary battery comprising the non-aqueous electrolyte according to one embodiment of the present invention, an electrode part comprising a positive electrode and a negative electrode that face each other at opposite sides of the non-aqueous electrolyte, and a separator electrically separating the positive electrode from the negative electrode.
The lithium secondary battery exhibits considerable stability upon overcharging, particularly, even upon high-rate overcharging, as well as improved high-temperature property and life cycle property, owing to the effects of the non-aqueous electrolyte. Furthermore, the lithium secondary battery has a relatively high charge capacity at a low temperature of -20 °C or less, thus having improved low-temperature property. For example, a ratio of a charge capacity at - 20°C to a charge capacity at 20°C of the lithium secondary battery is 0.34 or more.
Meanwhile, FIG. 1 is a schematic diagram illustrating the lithium secondary battery. More specifically, FIG. 1 schematically illustrates the lithium secondary battery wherein LiCoO₂ is used as an active material of a positive electrode 100, carbon (C) is used as an active material of a negative electrode 110, and non-aqueous electrolyte is used as an electrolyte 130, according to an embodiment of the present invention.
As shown in FIG. 1, the lithium secondary battery comprises the positive electrode 100, the negative electrode 110, the electrolyte 130 and the separator 140.
The positive electrode 100 may be made of a positive active material-coated metal (e.g., aluminum). Although LiCoO₂ is used as the positive active material in the lithium secondary battery shown in FIG. 1, there may be lithium metal oxide selected from the group consisting of LiCoO₂, LiMnO₂, LiMn₂O₄, LiNiO₂ and LiN_{1-x-y}CoₓM_{y}O₂ (wherein, 0 ≤ x ≤ 1, 0 ≤ y ≤ 1, 0 ≤ x + y ≤ 1, M is Al, Sr, Mg or La), or a lithium intercalation compound such as lithium calcogenide. Any positive active material may be used without particular limitation so long as it is applicable to a lithium secondary battery.
The negative electrode 110 may be made of a negative active material-coated metal (*e.g.,* copper). Although carbon (selected from crystalline and amorphous carbon) is used as the negative active material in the lithium secondary battery of FIG. 1, there may be used a metal, metal oxide, lithium metal, a lithium alloy, a carbon composite or a metal-carbon composite, each having the reversibility of lithium intercalation/deintercalation. Any negative active material may be used without particular limitation so long as it is applicable to a lithium secondary battery.

The metal used for the positive electrode 100 and the negative electrode 110 receives a voltage from an external source during charging, and supplies the voltage to the outside during discharging. The positive active material serves to collect positive charges, and the negative active material serves to collect negative charges.

The separator 140 electrically separates the positive electrode 100 from the negative electrode 110.

The separator 140 may be a polyethylene or polypropylene mono-layered separator, a polyethylene/polypropylene double- layered separator, or a polyethylene/polypropylene/polyethylene or polypropylene/polyethylene/polypropylene triple-layered separator.

### [Mode for Invention]

The present invention will be better understood from the following examples. However, these examples are not to be construed as limiting the scope of the invention.

### EXAMPLES

### Reference Examples 1 to 6 and Examples 7 and 8 and Comparative Examples 1 to 7

LiCoO₂ as a positive active material, polyvinylidene fluoride (PVDF) as a binder, and carbon as a conductive agent were mixed at a weight ratio of 92 : 4 : 4. Then, the mixture was dispersed in N-methyl-2-pyrrolidone, to prepare positive electrode slurry. The slurry was coated on an aluminum foil of 20 µm, followed by drying and compressing, to manufacture a positive electrode.

Artificial crystalline graphite as a negative active material and polyvinylidene fluoride (PVDF) as a binder were mixed at a weight ratio of 92 : 8. Then, the mixture was dispersed in N-methyl-2-pyrrolidone to prepare a negative electrode slurry. The slurry was coated on a copper foil of 15 µm, followed by drying and compressing, to manufacture a negative electrode.

The resulting positive and negative electrodes were wound and pressed together with a polyethylene separator having a thickness of 16 µm, and placed into a prismatic can having the dimensions of 30 mm x 48 mm x 6 mm. 1 M LiPF₆ as a lithium salt was added to a mixed solvent of ethylene carbonate (EC) and ethylmethyl carbonate (EMC) at a volume ratio of 1 : 2 to prepare a basic electrolyte. To the basic electrolyte, added is an additive in each amount shown in Table 1 to prepare a non-aqueous electrolyte. The electrolyte was injected into an inlet of each prismatic can, followed by sealing to manufacture a rectangular battery. Herein, the content of the additive shown in Table 1 is parts by weight with respect to 100 parts by weight of the basic electrolyte.

**Table 1**

| | Additive | Content (parts by weight) |
|---|---|---|
| Reference Ex. 1 | 4-fluorodiphenyl ether | 5 |
| Reference Ex. 2 | 4-fluorodiphenyl ether | 10 |
| Reference Ex. 3 | 4-fluorodiphenyl ether | 20 |
| Reference Ex. 4 | 4-fluorodiphenyl ether | 30 |
| Reference Ex. 5 | 4-chlorodiphenyl ether | 5 |
| Reference Ex. 6 | 4-bromodiphenyl ether | 5 |
| Ex. 7 | 4-fluorobenzyl phenyl ether | 5 |
| Ex. 8 | 4-chlorobenzyl phenyl ether | 5 |
| Comp. Ex. 1 | 4,4'-difluorodiphenyl ether | 5 |
| Comp. Ex. 2 | 4,4'-dichlorodiphenyl ether | 5 |
| Comp. Ex. 3 | 4,4'-dibromodiphenyl ether | 5 |
| Comp. Ex. 4 | - | - |
| Comp. Ex. 5 | diphenyl ether | 5 |
| Comp. Ex. 6 | biphenyl | 3 |
| Comp. Ex. 7 | cyclohexylbenzene | 3 |

### Measurement of decomposition-initiating voltage

The decomposition-initiating voltage of each non-aqueous electrolyte prepared in Reference Examples 1, 5 and 6, and Examples 7 and 8, and Comparative Examples 1 to 7 was measured by linear sweep voltametry (LSV). The results are shown in Table 2.

The measurement of the decomposition-initiating voltage was carried out under the following conditions:
working electrode: Pt; reference electrode: Li-metal; counter electrode: Li-metal; voltage range: 3 to 7 V; and scan rate: 0.1 mV/s.

**Table 2**

| Additive | Decomposition voltage (V) |
|---|---|
| 4-fluorodiphenyl ether (Reference Ex. 1) | 4.54 |
| 4-chlorodiphenyl ether (Reference Ex. 5) | 4.55 |
| 4-bromodiphenyl ether (Reference Ex. 6) | 4.55 |
| 4-fluorobenzyl phenyl ether (Ex. 7) | 4.52 |
| 4-chlorobenzyl phenyl ether (Ex. 8) | 4.51 |
| 4,4'-difluorodiphenyl ether (Comp. Ex. 1) | 4.71 |
| 4,4'-dichlorodiphenyl ether (Comp. Ex. 2) | 4.76 |
| 4,4'-dibromodiphenyl ether (Comp. Ex. 3) | 4.75 |
| - (Comp. Ex. 4) | 6.00 |
| diphenyl ether (Comp. Ex. 5) | 4.45 |
| biphenyl (Comp. Ex. 6) | 4.45 |
| Cyclohexylbenzene (Comp. Ex. 7) | 4.60 (4.50) |

As can be seen from the data of Table 2, the additives used in Reference Examples 1, 5, and 6, and Examples 7 and 8, which are halogenated diphenyl ether compound of the Formula 1, initiated oxidative decomposition at a voltage of about 4.50 to 4.60 V, lower than decomposition-initiating voltage of the basic organic solvent (*i.e*., about 6 V). Accordingly, upon overcharging of the lithium secondary battery, it could be confirmed that the additive each used in Reference Examples 1, 5, and 6, and Examples 7 and 8, prior to the basic organic solvent, would undergo oxidative decomposition. The oxidative decomposition of the additive leads to formation of a coating on a positive electrode. The coating prevents the basic organic solvent from undergoing oxidative decomposition, thus avoiding gas generation resulted from oxidative decomposition. As a result, the internal pressure of the battery is reduced, and the thickness of the battery is thus decreased after full-charging. Hence, it is possible to ensure stability of the lithium secondary battery upon overcharging.

On the other hand, the additives of other diphenyl ether compounds used in Comparative Examples 1 to 3, in which hydrogen of both phenyl groups is substituted by halogen, initiated oxidative decomposition at a voltage of 4.70 V or more, which is higher than that of the additive each used in Reference Examples 1, 5, and 6, and Examples 7 and 8. However, upon high-rate overcharging, to which a charge capacity C twice or more than that of the lithium secondary battery is applied, the basic organic solvent was known to undergo oxidative composition and generate undesired heat, even at a relatively low voltage of 4.70 V more and less. Accordingly, in a case where each additive of Comparative Examples 1 to 3 is used, the organic solvent, prior to the additive, may undergo oxidative composition to generate the undesired gas and heat, upon the high-rate overcharging, thus making it impossible to ensure stability of the lithium secondary battery to a desired level, upon the high-rate overcharging.

In addition, diphenyl ether, biphenyl and cyclohexylbenzene used as an additive each in Comparative Examples 5 to 7 may be expected to initiate oxidative decomposition at a voltage lower than that of the basic organic solvent and contribute to ensuring stability in overcharging. However, it was confirmed that these additives of Comparative Examples may initiate oxidative decomposition at a low voltage of 4.45 V or less and 4.50 V or less, and leave a deposit of the resulting product on the surface of a positive electrode.

Although the lithium secondary battery, to which each additive in Comparative Examples 5 to 7 is applied, is operated at a normal driving voltage, in a case where the battery is stored at a high temperature or is partly exposed to a high voltage, the additive undergoes oxidative decomposition and continuously leaves a deposit of the resulting product on the positive electrode. Accordingly, the use of the lithium secondary battery for a long time causes a continuous reduction in content of the additive, thus making it difficult to ensure stability to the desired level upon overcharging. Furthermore, even under normal conditions, continuous deposition of the product resulting from decomposition of the additive causes a large decrease in capacity of the secondary battery corresponding to the deposition, and deterioration of life cycle and high-temperature properties.

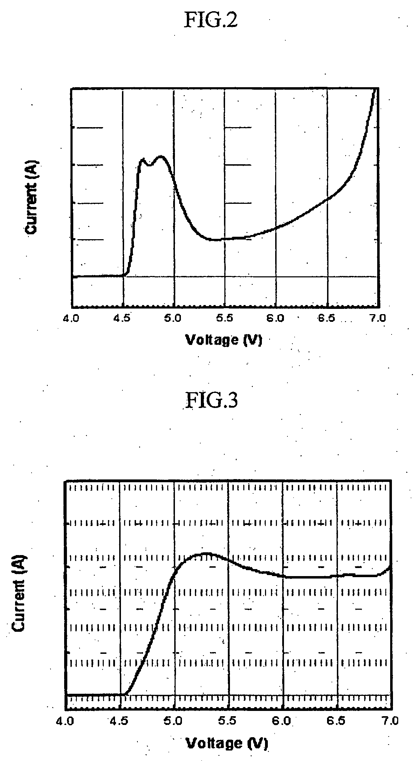

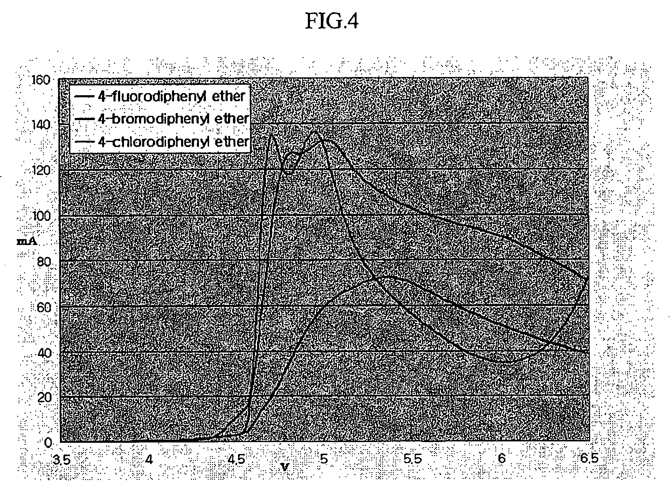

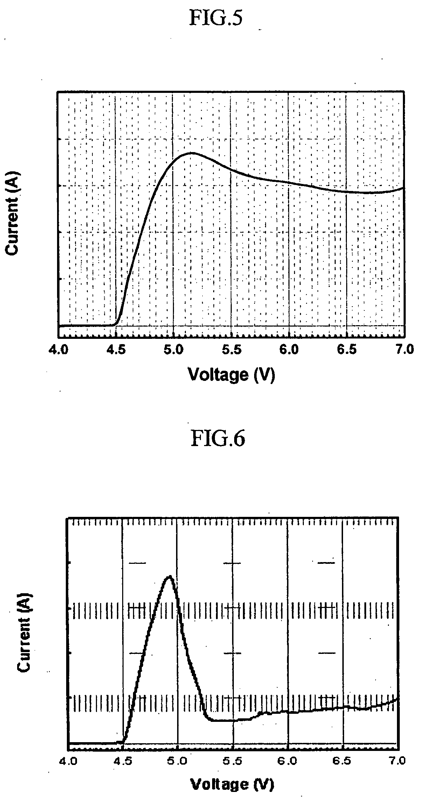

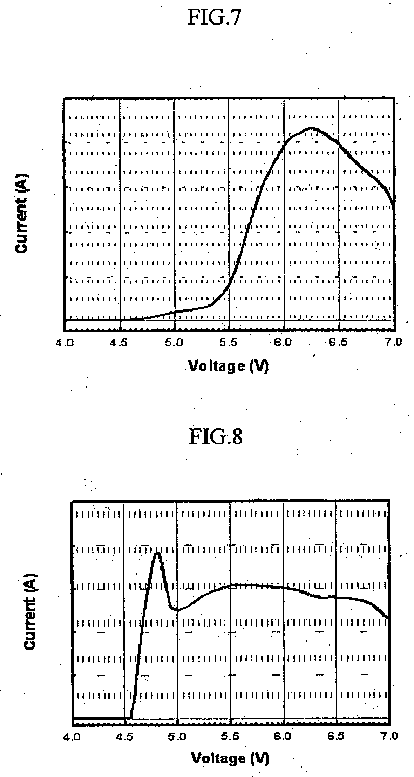

FIG. 2 is a graph illustrating an LSV (linear sweep voltametry) measurement result of an electrolyte containing 4-bromodiphenyl ether. FIG. 3 is a graph illustrating an LSV measurement result of an electrolyte containing 4-chlorodiphenyl ether. FIG. 4 is a graph illustrating comparison of an LSV measurement result of an electrolyte containing each of 4-chlorodiphenyl ether, 4-fluorodiphenyl ether and 4-bromodiphenyl ether. FIG. 5 is a graph illustrating an LSV measurement result of an electrolyte containing diphenyl ether. FIG. 6 is a graph illustrating an LSV measurement result of an electrolyte containing biphenyl. FIG. 7 is a graph illustrating an LSV measurement result of an electrolyte containing cyclohexylbenzene.

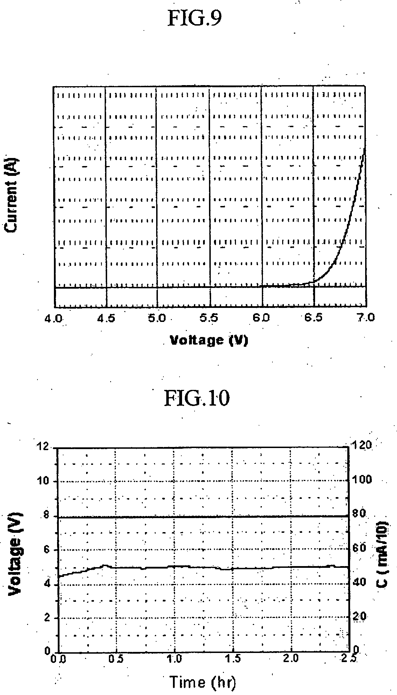

FIG. 8 is a graph illustrating an LSV measurement result of an electrolyte containing biphenyl and cyclohexylbenzene. FIG. 9 is a graph illustrating an LSV measurement result of an electrolyte containing no halogenated diphenyl ether.

As shown in FIGs. 2 to 4, the electrolyte containing each of 4-chlorodiphenyl ether, 4-fluorodiphenyl ether or 4-bromodiphenyl ether as an additive had an oxidation voltage of 4.54 to 4.55 V, which is considerably lower than that of the basic electrolyte (ie., a mixture of a EC/EMC (1 : 2, v/v) solvent and 1 M LiPF₆) containing no the additive.

For this reason, when 4-chlorodiphenyl ether, 4-fluorodiphenyl ether or 4-bromodiphenyl ether is added to the non-aqueous electrolyte, the additive, prior to the electrolyte, undergoes oxidization to form a coating on the positive electrode, thereby inhibiting the electrolyte from being decomposed, and improving stability of the lithium secondary battery.

Even if the basic electrolyte undergoes oxidation, it forms no coating, and generates only gas derived from decomposition of the organic solvent, thus hardly having an influence on the positive electrode. On the other hand, 4-chlorodiphenyl ether, 4-fluorodiphenyl ether or 4-bromodiphenyl ether is used as an additive, an oxidation product is deposited on the positive electrode in the form of a black tar at a voltage higher than the oxidation voltage. This is the reason that the oxidation product is coated and deposited on the positive electrode. While the voltage higher than the oxidation voltage is maintained, the oxidation continuously occurs, thereby causing a rapid increase of the product deposited on the surface of the positive electrode and a continuous current consumption during overcharging of the lithium secondary battery, preventing the electrolyte from being decomposed to ensure stability of the battery. Referring to FIG. 4, it could be confirmed that among these halogenated diphenyl ethers, 4-chlorodiphenyl ether having a chlorine substituent and 4-fluorodiphenyl ether having a fluorine substituent have a high reactivity at an oxidation voltage or more, as compared to 4-bromodiphenyl ether. Accordingly, 4-chlorodiphenyl ether and 4-fluorodiphenyl ether undergo oxidation decomposition more rapidly, and thus leave a coating and a deposit of the oxidation product on the positive electrode surface at a high rate, as compared to the case of 4-bromodiphenyl ether. As a result, 4-chlorodiphenyl ether and 4-fluorodiphenyl ether contribute to improving stability of the lithium secondary battery more efficiently.

### Evaluation for variation in thickness and life cycle of battery after charging

The lithium secondary batteries manufactured by injecting electrolytes of Reference example 1 to 6 and examples 7 and 8 and Comparative Example 4 to 7, were charged with an electric current of 166 mA to a charge voltage of 4.2 V under the conditions of CC-CV (constant current-constant voltage), and left for 1 hour. Then, batteries were discharged with an electric current of 166 mA to a discharge voltage of 2.75 V, and left for 1 hour. After repeating a series of charging and discharging three times, the batteries were charged with an electric current of 780 mA to a charge voltage of 4.2 V for 2.5 hours. The batteries were put in high-temperature chamber of 85°C and left for 4 days. Variation rate of the thickness of each battery measured Upon initial assembly to the thickness thereof measured after charging was evaluated. The result was shown in Table 3.

The lithium secondary batteries manufactured by injecting electrolytes of Reference example 1 to 6 and examples 7 and 8 and Comparative Example 4 to 7, were charged with 1 C to a charge voltage of 4.2 under the conditions of CC-CV, and discharged with 1 C to a cut-off voltage of 3 V under the conditions of CC. After repeating a series of charging and discharging 100 and 300 times, the maintenance rate in capacity of batteries (*i.e.,* the rate of a remaining capacity to an initiate capacity) was calculated. The results were shown in Table 3.

**Table 3**

| | Additive | Addition amount (parts by weight) | Variation rate in thickness (85 °C, after 4 days, %) | Maintenance rate in capacity (100 cycle repetition, %) | Maintenance rate in capacity (300 cycle repetition, %) |
|---|---|---|---|---|---|
| Reference Ex. 1 | 4-fluorodiphenyl ether | 5 | 10 | 87 | 85 |
| Reference Ex. 2 | 4-fluorodiphenyl ether | 10 | 10 | 90 | 85 |
| Reference Ex. 3 | 4-fluorodiphenyl ether | 20 | 10 | 85 | 82 |
| Reference Ex. 4 | 4-fluorodiphenyl ether | 30 | 10 | 75 | 65 |
| Reference Ex. 5 | 4-chlorodiphenyl ether | 5 | 10 | 87 | 82 |
| Reference Ex. 6 | 4-bromodiphenyl ether | 5 | 10 | 87 | 83 |
| Ex. 7 | 4-fluorobenzyl phenyl ether | 5 | 10 | 87 | 82 |
| Ex. 8 | 4-chlorobenzyl phenyl ether | 5 | 10 | 87 | 84 |
| Comp. Ex. 4 | - | - | 30 | 75 | 70 |
| Comp. Ex. 5 | diphenyl ether | 5 | 20 | 75 | 70 |
| Comp. Ex. 6 | Biphenyl | 3 | 50 | 70 | 65 |
| Comp. Ex. 7 | Cyclohexylbenzene | 3 | 45 | 75 | 70 |

It could be confirmed from the data of Table 3 that the batteries of Reference examples 1 to 6 and examples 7 and 8 had a slight increase rate in thickness and a slight decrease in capacity, thus exhibiting more improved high-temperature and life cycle properties, as compared to Comparative Examples 4 to 7.
Biphenyl and cyclohexylbenzene each used in Comparative Examples 4 to 7 are decomposed even at a relatively low voltage. Although a battery is operated at a normal driving voltage, in a case where the battery is stored at a high temperature or is partly exposed to a high voltage, the resulting product is continuously deposited on the surface of a positive electrode. This causes a great decrease in capacity of the secondary battery corresponding to the deposition.

### Evaluation for overcharge characteristics of battery

FIGs. 10 to 15 are graphs illustrating a measurement result of a voltage and current of each lithium secondary battery in Reference Examples 1 and 5, and Comparative Examples 4 to 7 overcharged with an electric current of 780 mA for 2.5 hours in a 4.2 V full-charged state, respectively.

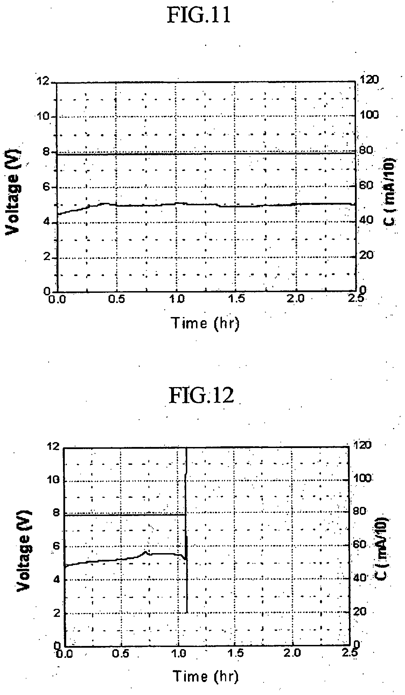

As shown in FIG. 10, in a case of Reference Example 1, after charging to 4.2 V and overcharging of the battery, 4-fluorodiphenyl ether initiates decomposition at a voltage of 4.5 to 4.6 V. As a result, the voltage of the battery elevates to 5.3 V and then decreases to 5.2 V. As shown in FIG. 11,4-chlorodiphenyl ether (Example 5) initiates decomposition at a voltage of 4.5 to 4.6 V. As a result, the voltage of the battery elevates to 5.1 V and decreases to 5.0 V. The variation in voltage is based on a polymerization product deposited on a positive electrode and polymerization heat by polymerization derived from oxidation of 4-fluorodiphenyl ether and 4-chlorodiphenyl ether.

The heat generation causes shut-down of a separator. After further overcharging, a conductive product is deposited in fine pores where no shut-down is occurred. The deposition causes a fine short-circuit between a positive electrode and a negative electrode, thereby allowing a current to flow, and leading to a further increase in voltage. After reaching a critical temperature, the temperature stabalizes without further increase.

The lithium secondary batteries of Reference Examples 1 and 5, to which the halogenated diphenyl ether compound is applied, induce an internal short-circuit and undergo no increase in voltage, thus preventing heat explosion upon overcharging, in spite of continuous current application, but allowing voltage drop to occur when not charging. Accordingly, the lithium secondary batteries of Reference Examples 1 and 5 are more stable than that of comparative Example 4, to which the halogenated diphenyl ether compound is not applied.

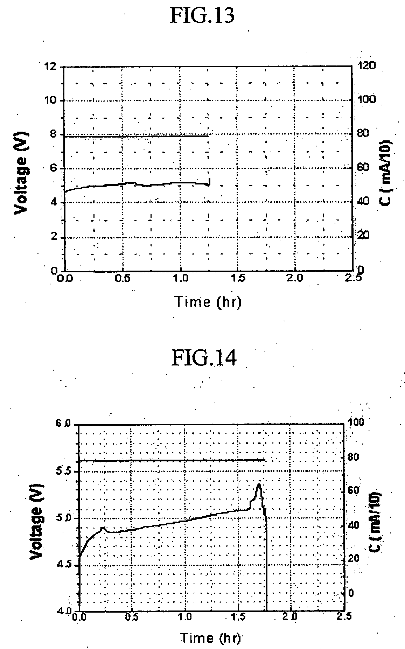

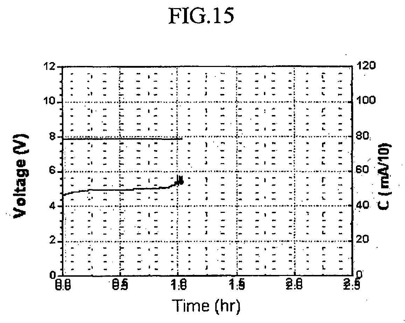

Referring to FIGs. 14 and 15, it could be seen that the use of biphenyl or cyclohexylbenzene made it difficult to ensure stability upon overcharging. Referring to FIG. 13, it could be seen that the use of diphenyl ether containing no halogen substitute as an additive makes it difficult to ensure stability upon overcharging.

Ten lithium secondary batteries each in accordance with Reference examples 1 to 6 and examples 7 and 8 and Comparative Examples 1 to 7 were manufactured. After charged at 4.2 V, the lithium secondary batteries were sequentially subjected to overcharging with 780 mA to 12 V, and high-rate overcharging with 1,560 mA to 12 V (*i.e.,* the charge capacity applied during the high-rate overcharging is twice as high as the charge capacity applied during the high-rate overcharging). During overcharging and high-rate overcharging, each lithium secondary battery was evaluated for stability. More specifically, upon overcharging with an electric current of 780 mA to a charge voltage of 12 V under the conditions of CC-CV for 2.5 hours, and upon high-rate overcharging with an electric current of 1,560 mA to a charge voltage of 12 V under the conditions of CC-CV for 2.5 hours, each lithium secondary battery was evaluated for properties. The results were shown in Table 4.

**Table 4**

| | Additive | Content (parts by weight) | 780 mA/2.5 hr | 1,560 mA/2.5 hr |
|---|---|---|---|---|
| Reference Ex. 1 | 4-fluorodiphenyl ether | 5 | 9L0, 1L5 | 9L0, 1L5 |
| Reference Ex. 2 | 4-fluorodiphenyl ether | 10 | 10L0 | 10L0 |
| Reference Ex. 3 | 4-fluorodiphenyl ether | 20 | 10L0 | 10L0 |
| Reference Ex. 4 | 4-fluorodiphenyl ether | 30 | 10L0 | 10L0 |
| Reference Ex. 5 | 4-chlorodiphenyl ether | 5 | 9L0, 1L5 | 8L0, 2L5 |
| Reference Ex. 6 | 4-bromodiphenyl ether | 5 | 8L0, 2L5 | 8L0, 2L5 |
| Ex. 7 | 4-fluorobenzyl phenyl ether | 5 | 10L0 | 10L0 |
| Ex. 8 | 4-chlorobenzyl phenyl ether | 5 | 10L0 | 10L0 |
| Comp. Ex. 1. | 4,4'-difluorodiphenyl ether | 5 | 8L0, 2L5 | 5L0, 5L5 |
| Comp. Ex. 2 | 4,4'-dichlorodiphenyl ether | 5 | 10L0 | 5L0, 5L5 |
| Comp. Ex. 3 | 4,4'-dibromodiphenyl ether | 5 | 8L0, 2L5 | 3L0, 7L5 |
| Comp. Ex. 4 | - | - | 10L5 | 10L5 |
| Comp. Ex.5 | diphenyl ether | 5 | 10L5 | 10L5 |
| Comp. Ex. 6 | biphenyl | 3 | 2L0, 8L5 | 2L0, 8L5 |
| Comp. Ex. 7 | cyclohexylbenzene | 3 | 10L5 | 10L5 |

In Table 4, the number in front of "L" is the number of a test battery.

Stability of the batteries after overcharging was graded by the following scale:
L0: Good; L1: Leakage; L2: Spark; L3: Smoke; L4: ignition; L5: rupture

As shown in Table 4, batteries in Reference examples 1 to 6 and examples 7 and 8, where the halogenated diphenyl ether compound is dissolved in the non-aqueous electrolyte, consumed an overcharge current. On the other hand, the battery in Comparative Example 4 uses the non-aqueous electrolyte, where no halogenated diphenyl ether compound is dissolved, thus allowing the overcharge current to be continuously stored in an electrode therein.

The electrode of the battery in Comparative Example 4 was destabilized and reacted with the organic solution in the non-aqueous electrolyte to generate heat. The heat accelerates an increase in temperature. Although the current was shut-down, this increase in temperature was maintained, thus leading to ignition and rupture of the battery.

On the other hand, in the case of the batteries in Reference examples 1 to 6 and examples 7 and 8, where the halogenated diphenyl ether compound is added to the non-aqueous electrolyte, current shut-down was expedited and a polymerization product was deposited on the surface of a positive electrode upon overcharging. The polymerization product serves as a current bridge between a positive electrode and a negative electrode to form a fine short-circuit, thereby allowing a current to flow, and enabling a predetermined voltage to maintain. As a result, the temperature stabilizes, thereby stabilizing the lithium secondary battery during overcharging. In addition, the occurrence of the fine short-circuit, after current cut-off, contributes to a reduction in heat generation, owing to a low voltage in spite of the current flow. During overcharging of the battery, the oxidation of the halogenated diphenyl ether compound involves overcharge current consumption and heat generation. This reaction heat causes thermal decomposition of the separator. At this time, the resulting product was solid-deposited on the separator. The solid deposition shuts pores and has electric conductivity, thus causing a fine short-circuit and enabling stabilization of the battery.

Meanwhile, it could be confirmed that the batteries in Reference examples 1 to 6 and examples 7 and 8 exhibited more improved stability during overcharging, as compared to the batteries in Comparative Examples 1 to 3.

### Evaluation for low-temperature property

The charge capacity at both -20°C and 20°C was calculated for the lithium secondary batteries in reference Examples 1, 5, and 6, and Examples 7 and 8, and Comparative Examples 1 to 3. The rate of the charge capacity of each battery at -20°C to the charge capacity thereof at 20°C was obtained. The results are shown in Table 5.

**Table 5**

| | Additive | Content (parts by weight) | Charge capacity at - 20°C/ charge capacity at 20°C (%) |
|---|---|---|---|
| Reference Ex.1 | 4-fluorodiphenyl ether | 5 | 34 |
| Reference Ex. 5 | 4-chlorodiphenyl ether | '5 | 35 |
| Reference Ex. 6 | 4-bromodiphenyl ether | 5 | 38 |
| Ex. 7 | 4-fluorobenzylphenyl ether | 5 | 42 |
| Ex.8 | 4-chlorobenzylphenyl ether | 5 | 43 |
| Comp. Ex. 1 | 4,4'-difluorodiphenyl ether | 5 | 12 |
| Comp. Ex. 2 | 4,4'-dichlorodiphenyl ether | 5 | 15 |
| Comp. Ex. 3 | 4,4'-dibromodiphenyl ether | 5 | 14 |

As could be seen from the date of Table 5, the batteries in Reference Examples 1, 5, and 6, and Examples 7 and 8 maintained a relatively high charge capacity even at a low temperature of -20°C, thereby exhibiting more improved low-temperature property, as compared to the batteries in Comparative Examples 1 to 3.

The improvement in low-temperature property is the reason that diphenyl ether compounds in Comparative Examples 1 to 3, where hydrogen of both phenyl groups is substituted by halogen, underwent a rapid increase in viscosity even at a low temperature of 20°C, but the batteries in Reference Examples 1, 5, and 6, and Examples 7 and 8 underwent no rapid increase in viscosity.

## Claims

1. A non-aqueous electrolyte for a lithium secondary battery comprising:
a lithium salt;
a basic organic solvent including a carbonate-based solvent; and **characterized in that** the non-aqueous eletrolyte comprises
a halogenated diphenyl ether compound represented by the following Formula 1 enabling stabilization of the lithium secondary battery at an overcharge voltage of 4.2 V or more, 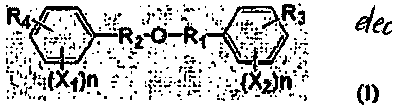
wherein R₁ is a single bond, and R₂ is a C₁-C₅ alkyl group; R₃ and R₄ are hydrogen; X₁ is halo and X₂ is hydrogen; and n is an integer of 1 to 4.

2. The non-aqueous electrolyte for a lithium secondary battery according to claim 1, wherein X₁ is chlorine or fluorine.

3. The non-aqueous electrolyte for a lithium secondary battery according to claim 1, wherein the halogenated diphenyl ether compound is selected from the group consisting of chlorobenzyl phenyl, ether, fluorobenzyl phenyl ether, and mixture thereof.

4. The non-aqueous electrolyte for a lithium secondary battery according to claim 1, wherein the halogenated diphenyl ether compound is used in an amount of 0.1 to 20 parts by weight, based on 100 parts by weight of the basic organic solvent.

5. The non-aqueous electrolyte for a lithium secondary battery according to claim 1, wherein the halogenated diphenyl ether compound is used in an amount of 1 to 10 parts by weight, based on 100 parts by weight of the basic organic solvent.

6. The non-aqueous electrolyte for a lithium secondary battery according to claim 1, wherein the basic organic solvent is a mixture of a carbonate-based solvent and at least one solvent selected from the group consisting of an ester-based solvent, aromatic hydrocarbon-based solvent and ether-based solvent.

7. The non-aqueous electrolyte for a lithium secondary battery according to claim 6, wherein the carbonate-based solvent comprises at least one linear carbonate selected from the group consisting of dimethyl carbonate (DMC), diethyl carbonate (DEC) and methylethyl carbonate (MEC), and at least one cyclic carbonate selected from the group consisting of ethylene carbonate (EC), propylene carbonate (PC) and butylene carbonate (BC).

8. The non-aqueous electrolyte for a lithium secondary battery according to claim 6, wherein the ester-based solvent is selected from the group consisting of γ-butyrolactone (BL), decanolide, valerolactone, mevalonolactone, caprolactone, n-methyl acetate, n-ethyl acetate, n-propyl acetate, and mixture thereof.

9. The non-aqueous electrolyte for a lithium secondary battery according to claim 6, wherein the aromatic hydrocarbon-based solvent is selected from the group consisting of fluorobenzene, 4-chlorotoluene (4-CT), 4-fluorotoluene (4-FT) and mixture thereof.

10. The non-aqueous electrolyte for a lithium secondary battery according to claim 6, wherein the ether-based solvent is selected from the group consisting of dimethyl ether, diethyl ether, dipropyl ether, dibutyl ether, and mixture thereof.

11. The non-aqueous electrolyte for a lithium secondary battery according to claim 1, wherein the lithium salt is selected from the group consisting of LiPF₆, LiClO₄, LiAsF₆, LiBF₄, LiSbF₆, LiAlO₄, LiAlCl₄, LiCF₃SO₃, LiC₄F₉SO₃, LiN(C₂FsSO₃)₂, LiN(C₂F₅SO₂)₂, LiN(CF₃SO₂)₂, LiN(CₓF₂ₓ₊₁SO₂)(C_{y}F_{2y+1}SO₂) (wherein, each of x and y is a positive integer). LiCl, LiI, and mixture thereof.

12. The non-aqueous electrolyte for a lithium secondary battery according to claim 1, wherein the lithium salt is used in a concentration of 0.6 M to 2.0 M, based on the basic organic solvent.

13. A lithium secondary battery with high stability upon overcharging including:
the non-aqueous electrolyte according to claim 1;
an electrode part including a positive electrode and a negative electrode faced opposite to each other with the non-aqueous electrolyte; and
a separator electrically separating the positive electrode from the negative electrode.

14. The lithium secondary battery according to claim 13 wherein:
the non-aqueous electrolyte according to claim 1 comprises a mixed solvent of ethylene carbonate and ethylmethyl carbonate;
the positive electrode comprises LiCoO₂ as a positive active material; and
the negative electrode comprises artificial crystalline graphite as a negative active material;
wherein the lithium secondary battery has a ratio of a charge capacity at -20°C to a charge capacity at 20°C of 0.34 or more.

15. The lithium secondary battery according to claim 13, wherein the positive electrode is coated with at least one active material selected from the group consisting of LiCoO₂, LiMnO₂, LiMn₂O₄, LiNiO₂ and LiN_{1-x-y}CoₓM_{y}O₂ (wherein, 0≤x≤1, 0≤y≤1, 0≤x+y≤1, M is Al, Sr, Mg or La).

16. The lithium secondary battery according to claim 13, wherein the negative electrode is coated with at least one active material selected from the group consisting of crystalline carbon, amorphous carbon, a carbon composite, a metal-carbon composite, a metal, a metal oxide, lithium metal and lithium alloy each having the reversibility of lithium intercalation/deintercalation.

17. The lithium secondary battery according to claim 13, wherein the separator is selected from the group consisting of a polyethylene or polypropylene mono-layered separator, a polyethylene/polypropylene double-layered separator, and a polyethylene/polypropylene/polyethylene triple-layered separator and a polypropylene/polyethylene/polypropylene triple-layered separator.

## Patentansprüche

1. Nichtwässriger Elektrolyt für eine Lithium-Sekundärbatterie, umfassend:
ein Lithiumsalz;
ein basisches organisches Lösungsmittel, welches ein Lösungsmittel auf Carbonatbasis einschließt; und **dadurch gekennzeichnet ist, dass** der nichtwässrige Elektrolyt eine halogenierte Diphenyletherverbindung umfasst, die durch die folgende Formel 1 dargestellt wird, die eine Stabilisierung der Lithium-Sekundärbatterie bei einer Überladungsspannung von 4,2 V oder mehr ermöglicht, 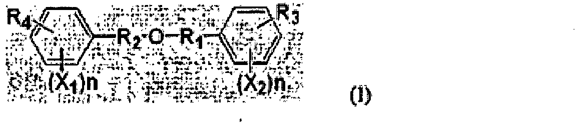
wobei R₁ eine einzelne Bindung ist, und R₂ eine C₁-C₅-Alkylgruppe ist; R₃ und R₄ Wasserstoff sind; X₁ Halogen ist und X₂ Wasserstoff ist; und n eine ganze Zahl von 1 bis 4 ist.

2. Nichtwässriger Elektrolyt für eine Lithium-Sekundärbatterie gemäß Anspruch 1, wobei X₁ Chlor oder Fluor ist.

3. Nichtwässriger Elektrolyt für eine Lithium-Sekundärbatterie gemäß Anspruch 1, wobei die halogenierte Diphenyletherverbindung aus der Gruppe bestehend aus Chlorbenzylphenylether, Fluorbenzylphenylether und einem Gemisch davon ausgewählt ist.

4. Nichtwässriger Elektrolyt für eine Lithium-Sekundärbatterie gemäß Anspruch 1, wobei die halogenierte Diphenyletherverbindung in einer Menge von 0,1 bis 20 Gewichtsteilen, bezogen auf 100 Gewichtsteile des basischen organischen Lösungsmittels, verwendet wird.

5. Nichtwässriger Elektrolyt für eine Lithium-Sekundärbatterie gemäß Anspruch 1, wobei die halogenierte Diphenyletherverbindung in einer Menge von 1 bis 10 Gewichtsteilen, bezogen auf 100 Gewichtsteile des basischen organischen Lösungsmittels, verwendet wird.

6. Nichtwässriger Elektrolyt für eine Lithium-Sekundärbatterie gemäß Anspruch 1, wobei das basische organische Lösungsmittel ein Gemisch eines Lösungsmittels auf Carbonatbasis und wenigstens eines Lösungsmittels ausgewählt aus der Gruppe bestehend aus einem Lösungsmittel auf Esterbasis, einem aromatischen Lösungsmittel auf Kohlenwasserstoffbasis und einem Lösungsmittel auf Etherbasis ist.

7. Nichtwässriger Elektrolyt für eine Lithium-Sekundärbatterie gemäß Anspruch 6, wobei das Lösungsmittel auf Carbonatbasis wenigstens ein lineares Carbonat ausgewählt aus der Gruppe bestehend Dimethylcarbonat (DMC), Diethylcarbonat (DEC) und Methylethylcarbonat (MEC), und wenigstens ein cyclisches Carbonat ausgewählt aus der Gruppe bestehend aus Ethylencarbonat (EC), Propylencarbonat (PC) und Butylencarbonat (BC) umfasst.

8. Nichtwässriger Elektrolyt für eine Lithium-Sekundärbatterie gemäß Anspruch 6, wobei das Lösungsmittel auf Esterbasis aus der Gruppe bestehend aus γ-Butyrolacton (BL), Decanolid, Valerolacton, Mevalonolacton, Caprolacton, n-Methylacetat, n-Ethylacetat, n-Propylacetat und einem Gemisch davon ausgewählt ist.

9. Nichtwässriger Elektrolyt für eine Lithium-Sekundärbatterie gemäß Anspruch 6, wobei das aromatische Lösungsmittel auf Kohlenwasserstoffbasis aus der Gruppe bestehend aus Fluorbenzol, 4-Chlortoluol (4-CT), 4-Fluortoluol (4-FT) und einem Gemisch davon ausgewählt ist.

10. Nichtwässriger Elektrolyt für eine Lithium-Sekundärbatterie gemäß Anspruch 6, wobei das Lösungsmittel auf Etherbasis aus der Gruppe bestehend aus Dimethylether, Diethylether, Dipropylether, Dibutylether und einem Gemisch davon ausgewählt ist.

11. Nichtwässriger Elektrolyt für eine Lithium-Sekundärbatterie gemäß Anspruch 1, wobei das Lithiumsalz aus der Gruppe bestehend aus LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiN(CₓF₂ₓ₊₁SO₂)(C_{y}F_{2y+1}SO₂) (wobei jedes von x und y eine positive ganze Zahl ist), LiCl, LiI, und einem Gemisch davon ausgewählt ist.

12. Nichtwässriger Elektrolyt für eine Lithium-Sekundärbatterie gemäß Anspruch 1, wobei das Lithiumsalz in einer Konzentration von 0,6 M bis 2,0 M, bezogen auf das basische organische Lösungsmittel, verwendet wird.

13. Lithium-Sekundärbatterie mit hoher Stabilität bei bzw. nach Überladung, einschließend:
den nichtwässrigen Elektrolyt gemäß Anspruch 1;
ein Elektrodenteil, das eine positive Elektrode und eine negative Elektrode einschließt, die einander über den nichtwässrigen Elektrolyt gegenüberliegen; und
ein Trennelement bzw. einen Separator, welches bzw. welcher die positive Elektrode elektrisch von der negativen Elektrode trennt.

14. Lithium-Sekundärbatterie gemäß Anspruch 13, wobei:
der nichtwässrige Elektrolyt gemäß Anspruch 1 ein gemischtes Lösungsmittel aus Ethylencarbonat und Ethylmethylcarbonat umfasst;
die positive Elektrode LiCoO₂ als positives aktives Material umfasst; und
die negative Elektrode künstliches kristallines Graphit als ein negatives aktives Material umfasst;
wobei die Lithium-Sekundärbatterie ein Verhältnis einer Ladungskapazität bei -20°C zu einer Ladungskapazität bei 20°C von 0,34 oder mehr aufweist.

15. Lithium-Sekundärbatterie gemäß Anspruch 13, wobei die positive Elektrode mit wenigstens einem aktiven Material beschichtet bzw. überzogen ist, welches ausgewählt ist aus der Gruppe bestehend aus LiCoO₂, LiMnO₂, LiMn₂O₄, LiNiO₂ und LiN_{1-x-y}CoₓM_{y}O₂ (wobei o ≤ x ≤ 1, 0 ≤ y ≤ 1,0 ≤ x + y ≤ 1, M ist Al, Sr, Mg oder La).

16. Lithium-Sekundärbatterie gemäß Anspruch 13, wobei die negative Elektrode mit wenigstens einem aktiven Material beschichtet bzw. überzogen ist, welches ausgewählt ist aus der Gruppe bestehend aus kristallinem Kohlenstoff, amorphem Kohlenstoff, einem Kohlenstoff-Komposit bzw. -Verbund, einem Metall-Kohlenstoff-Komposit bzw. -Verbund, einem Metall, einem Metalloxid, Lithiummetall und Lithiumlegierung, jeweils mit der Reversibilität bzw. Umkehrbarkeit einer Lithium-Interkalation bzw. Einlagerung/Deinterkalation.

17. Lithium-Sekundärbatterie gemäß Anspruch 13, wobei das Trennelement ausgewählt ist aus der Gruppe bestehend aus einem einschichtigen Polyethylen- oder Polypropylen-Trennelement, einem doppelschichtigen Polyethylen-/Polypropylen-Trennelement, und einem dreischichtigen Polyethylen-/Polypropylen-/Polyethylen-Trennelement und einem dreischichtigen Polypropylen-/Polyethylen-/Polypropylen-Trennelement.

## Revendications

1. Electrolyte non-aqueux pour une batterie secondaire au lithium comprenant :
un sel de lithium ;
un solvant organique basique comprenant un solvant à base d'un carbonate ; et **caractérisé en ce que** l'électrolyte non-aqueux comprend un composé oxyde de diphényle halogéné représenté par la formule 1 ci-après, permettant une stabilisation de la batterie secondaire au lithium pour une tension de surcharge de 4,2 V ou plus, 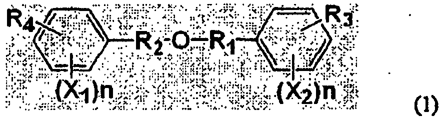 où R₁ est une liaison simple, et R₂ est un groupe alkyle en C₁-C₅ ; R₃ et R₄ sont des atomes d'hydrogène ; X₁ est un halogène et X₂ est un atome d'hydrogène ; et n est un entier de 1 à 4.

2. Electrolyte non-aqueux pour une batterie secondaire au lithium selon la revendication 1, dans lequel X₁ est le chlore ou le fluor.

3. Electrolyte non-aqueux pour une batterie secondaire au lithium selon la revendication 1, dans lequel le composé oxyde de diphényle halogéné est choisi dans le groupe consistant en l'oxyde de chlorobenzyle et de phényle, l'oxyde de fluorobenzyle et de phényle, et les mélanges de ceux-ci.

4. Electrolyte non-aqueux pour une batterie secondaire au lithium selon la revendication 1, dans lequel le composé oxyde de diphényle halogéné est utilisé en une quantité de 0,1 à 20 parties en poids pour 100 parties en poids du solvant organique basique.

5. Electrolyte non-aqueux pour une batterie secondaire au lithium selon la revendication 1, dans lequel le composé oxyde de diphényle halogéné est utilisé en une quantité de 1 à 10 parties en poids pour 100 parties en poids du solvant organique basique.

6. Electrolyte non-aqueux pour une batterie secondaire au lithium selon la revendication 1, dans lequel le solvant organique basique est un mélange d'un solvant à base d'un carbonate et d'au moins un solvant choisi dans le groupe consistant en un solvant à base d'un ester, un solvant à base d'un hydrocarbure aromatique et un solvant à base d'un éther.

7. Electrolyte non-aqueux pour une batterie secondaire au lithium selon la revendication 6, dans lequel le solvant à base d'un carbonate comprend au moins un carbonate linéaire choisi dans le groupe consistant en le carbonate de diméthyle (DMC), le carbonate de diéthyle (DEC) et le carbonate de méthyléthyle (MEC), et au moins un carbonate cyclique choisi dans le groupe consistant en le carbonate d'éthylène (EC), le carbonate de propylène (PC) et le carbonate de butylène (BC).

8. Electrolyte non-aqueux pour une batterie secondaire au lithium selon la revendication 6, dans lequel le solvant à base d'un ester est choisi dans le groupe consistant en la γ-butyrolactone (BL), le décanolide, la valérolactone, la mévalonolactone, la caprolactone, l'acétate de n-méthyle, l'acétate de n-éthyle, l'acétate de n-propyle et les mélanges de ceux-ci.

9. Electrolyte non-aqueux pour une batterie secondaire au lithium selon la revendication 6, dans lequel le solvant à base d'un hydrocarbure aromatique est choisi dans le groupe consistant en le fluorobenzène, le 4-chlorotoluène (4-CT), le 4-fluorotoluène (4-FT) et les mélanges de ceux-ci.

10. Electrolyte non-aqueux pour une batterie secondaire au lithium selon la revendication 6, dans lequel le solvant à base d'un éther est choisi dans le groupe consistant en l'oxyde de diméthyle, l'oxyde de diéthyle, l'oxyde de dipropyle, l'oxyde de dibutyle et les mélanges de ceux-ci.

11. Electrolyte non-aqueux pour une batterie secondaire au lithium selon la revendication 1, dans lequel le sel de lithium est choisi dans le groupe consistant en LiPF₆, LiClO₄, LiAsF₆, LiBF₄, LiSbF₆, Li1lO₄, LiAlCl₄, LiCF₃SO₃, LiC₄F₉SO₃, LiN (C₂F₅SO₃)₂, LiN(C₂F5SO₂)₂, LiN (CF₃SO₂)₂, LiN(CₓF₂ₓ₊₁SO₂) (C_{y}F_{2y+1}SO₂) (où chacun de x et de y est un entier positif), LiCl, LiI et les mélanges de ceux-ci.

12. Electrolyte non-aqueux pour une batterie secondaire au lithium selon la revendication 1, dans lequel le sel de lithium est utilisé à une concentration de 0,6 M à 2,0 M, par rapport au solvant organique basique.

13. Batterie secondaire au lithium ayant une grande stabilité à la surcharge, comprenant :
l'électrolyte non-aqueux selon la revendication 1;
une partie électrode comprenant une électrode positive et une électrode négative, en regard de l'électrolyte non-aqueux et opposées l'une à l'autre; et
un séparateur, qui sépare électriquement l'électrode positive de l'électrode négative.

14. Batterie secondaire au lithium selon la revendication 13, dans laquelle:
l'électrolyte non-aqueux selon la revendication 1 comprend un solvant mixte de carbonate d'éthylène et de carbonate d'éthylméthyle;
l'électrode positive comprend du LiCoO₂ en tant que matière active positive; et
l'électrode négative comprend un graphite cristallin artificiel en tant que matière active négative;
la batterie secondaire au lithium présentant un rapport entre la capacité de charge à -20°C et la capacité de charge à 20°C de 0,34 ou plus.

15. Batterie secondaire au lithium selon la revendication 13, dans laquelle l'électrode positive est revêtue d'au moins une matière active choisie dans le groupe consistant en LiCoO₂, LiMnO₂, LiMn₂O₄, LiNiO₂ et LiN_{1-x-y}CoₓM_{y}O₂ (où 0≤x≤1, 0≤y≤1, 0≤x+y≤1, M est Al, Sr, Mg ou La).

16. Batterie secondaire au lithium selon la revendication 13, dans laquelle l'électrode négative est revêtue d'au moins une matière active choisie dans le groupe consistant en le carbone cristallin, le carbone amorphe, un composite de carbone, un composite métal-carbone, un métal, un oxyde métallique, du lithium métallique et un alliage de lithium, chacun présentant une réversibilité de l'intercalation/désintercalation du lithium.

17. Batterie secondaire au lithium selon la revendication 13, dans laquelle le séparateur est choisi dans le groupe consistant en un séparateur monocouche de polyéthylène ou de polypropylène, un séparateur bicouche de polyéthylène/propylène et un séparateur tricouche de polyéthylène/polypropylène/polyéthylène et un séparateur tricouche de polypropylène/polyéthylène/polypropylène.
